(19) Europäisches Patentamt / European Patent Office / Office européen des brevets

(11) **EP 3 831 864 B1**

(12) **EUROPEAN PATENT SPECIFICATION**

(45) Date of publication and mention
of the grant of the patent:
**14.01.2026 Bulletin 2026/03**

(21) Application number: **19844071.1**

(22) Date of filing: **26.07.2019**

(51) International Patent Classification (IPC):
**B29C 61/06** *(2006.01)*    **B29D 7/01** *(2006.01)*
**B65D 75/00** *(2006.01)*    **C08G 63/183** *(2006.01)*
**C08G 63/672** *(2006.01)*   **C08J 5/18** *(2006.01)*
**B29C 55/14** *(2006.01)*    **B29K 67/00** *(2006.01)*
**B29K 105/00** *(2006.01)*

(52) Cooperative Patent Classification (CPC):
**C08G 63/672; B29C 61/06; B29D 7/01;
C08G 63/183; C08J 5/18;** B29C 55/143;
B29K 2067/00; B29K 2105/0085; B29K 2995/0039;
B29K 2995/0049; B65D 75/002; C08J 2367/02

(86) International application number:
**PCT/JP2019/029393**

(87) International publication number:
**WO 2020/026972 (06.02.2020 Gazette 2020/06)**

(54) **HEAT-SHRINKABLE POLYESTER-BASED FILM, HEAT-SHRINKABLE LABEL, AND PACKAGE**

WÄRMESCHRUMPFBARE FOLIE AUF POLYESTERBASIS, WÄRMESCHRUMPFBARES ETIKETT UND VERPACKUNG

FILM À BASE DE POLYESTER THERMORÉTRACTABLE, ÉTIQUETTE THERMORÉTRACTABLE ET EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2018 JP 2018146980**

(43) Date of publication of application:
**09.06.2021 Bulletin 2021/23**

(73) Proprietor: **TOYOBO CO., LTD.
Osaka-shi, Osaka 530-0001 (JP)**

(72) Inventors:
• **INOUE, Masafumi**
 **Tsuruga-shi, Fukui 914-8550 (JP)**
• **HARUTA, Masayuki**
 **Tsuruga-shi, Fukui 914-8550 (JP)**

(74) Representative: **Vossius & Partner
Patentanwälte Rechtsanwälte mbB
Siebertstrasse 3
81675 München (DE)**

(56) References cited:
EP-A1- 3 552 801          EP-A1- 3 581 604
EP-A1- 3 617 247          WO-A1-2017/018345
WO-A1-2018/110493      WO-A1-2018/110493
JP-A- 2017 177 677       JP-A- H0 753 737
JP-A- H0 753 737          JP-A- H02 289 627
JP-A- H04 164 930         JP-A- H06 256 711

**Description**

TECHNICAL FIELD

The present invention relates to a heat-shrinkable polyester-based film suitable for a heat-shrinkable label.

BACKGROUND ART

Recently, in applications such as label package doubling as protection of glass bottles, plastic bottles, or the like and as display of articles, cap sealing and accumulation package, there has been widely used, as a shrinkable label, a polyester-based heat-shrinkable film that is high in heat resistance, easy to incinerate, and excellent in solvent resistance. The use amount of the polyester-based heat-shrinkable film tends to increase being accompanied by an increase in volume of PET (polyethylene terephthalate) bottle containers and the like.

Heretofore, a heat-shrinkable polyester-based film has been widely utilized which shrinks greatly in the width direction. It is also known that a shrinkage ratio in the longitudinal direction, which is a non-shrinking direction, is made to be below zero (so-called extend due to heating) in order to achieve satisfactory shrinkage finishing properties (Patent Literature 1).

As shortcomings of a heat-shrinkable film with a high shrinkage ratio so as to be adaptable to use in various containers, there are problems that a natural shrinkage ratio and that a hot-water shrinkage ratio measured at 70°C lowers after storage at an ordinary temperature (after an aging treatment) becomes high (Patent Literatures 2 and 3). Patent Literature 2 tries to adopt a production method wherein the film is subjected to a biaxial stretch and discloses that a natural shrinkage ratio is improved by strengthening by cooling after biaxial orientation and lengthwise stretching. However, Patent Literature 2 does not disclose hot-water heat shrinkage ratios measured at 70°C before and after the aging treatment. In Patent Literature 3, although a natural shrinkage ratio is improved, technical findings concerning the improvement in the natural shrinkage ratio are not disclosed. In addition, values of the shrinkage ratios at 70°C before and after the aging treatment are not disclosed. When a decrease in a shrinkage ratio at 70°C is large, initial shrinkage ratios in shrinking the film are different before and after the aging treatment, whereby the shrinkage finishing properties become bad. In a shrinkage apparatus using a hot air having low heat transfer coefficient in particular, if the initial shrinkage ratios by hot air are different, shrinkage upon finishing may be insufficient and strain of label may result.

A film that heat-shrinks in the longitudinal direction as described in Patent Literature 4 is generally stretched between rolls using a speed difference between heated rolls, and thus a deformation speed of the film during stretching is faster than that of a film that shrinks in the width direction. It is not preferable if the deformation speed during stretching is fast, since a necking force is generated in a direction orthogonal to a stretching direction (non-shrinking direction) during stretching, and a heat-shrinkage ratio in the non-shrinking direction also becomes high. Therefore, it is important to suppress the necking force. High-temperature stretching is known as a means for suppressing the necking force. However, if a film stretching stress is reduced by high-temperature stretching (the necking force is suppressed), a molecular orientation in the stretching direction is also reduced whereby a heat-shrinkage ratio in a main shrinkage direction may be reduced, and in addition, the irregularity of thickness may increase.

Furthermore, if the interval between the rolls is increased so as to slow down the deformation speed during stretching, neck-in occurs in the film, resulting in significant difference in the characteristics in the width direction of the film after stretching, and therefore this is not preferable.

A polyester raw material that can improve the above-mentioned shortcomings has not been found.

Patent Literature 5 to 8 disclose heat-shrinkable polyester-based films comprising amorphous copolymerized polyester raw materials. Patent Literature 7 and Patent Literature 8 are state of the art pursuant to Article 54(3) EPC.

CITATION LIST

PATENT LITERATURE

Patent Literature 1: JP H05-33895 B
Patent Literature 2: JP 4411556 B
Patent Literature 3: JP 5249997 B
Patent Literature 4: JP 2011-79229 A
Patent Literature 5: JP H07 53737 A
Patent Literature 6: WO 2018/110493 A1
Patent Literature 7: EP 3 617 247 A1

Patent Literature 8: EP 3 581 604 A1

SUMMARY OF THE INVENTION

PROBLEMS TO BE SOLVED BY THE INVENTION

The present invention aims to provide a heat-shrinkable polyester-based film having a high heat-shrinkage ratio in the main shrinkage direction, a low natural shrinkage ratio and a change of a shrinkage ratio after an aging treatment, a low shrinkage stress, and a small irregularity of thickness. Further, the present disclosure also aims to provide a raw material to produce the heat-shrinkable polyester-based film.

SOLUTION TO THE PROBLEMS

The present invention is set out in the appended set of claims. Claim 1 contains a disclaimer excluding films comprising "raw material 12" of Patent Literature 7. Claim 1 contains also a disclaimer excluding films comprising "raw material G" of Patent Literature 8.

ADVANTAGEOUS EFFECTS OF THE INVENTION

The heat-shrinkable polyester-based film of the present invention not only has a high shrinkage ratio, but also has a small decrease in the shrinkage ratio measured at 70°C after an aging treatment. Therefore, the films before and after the aging treatment can continuously and industrially-stably shrink under the same shrinkage condition.
The raw material of the present disclosure has a low melt viscosity at 230°C of the resin temperature because of its low intrinsic viscosity. Therefore, the raw material may be extruded at a lower temperature than commonly-used polyester raw materials. The raw material comprises a lot of diethylene glycol such that a constituent unit derived from diethylene glycol is 7 mol% or more and 15 mol% or less in the total amount of glycol component 100 mol%. Nevertheless, when the raw material is made into a film having a thickness of $30\mu m$, it is possible to decrease a number of defects in 1mm size or more in the longitudinal direction of the film or in the width direction of the film to 1.5 or less on an average per 10 square meters of the film.
The heat-shrinkable polyester-based film of the present invention has not only a high shrinkage ratio, but also a low shrinkage stress and a small irregularity of thickness. Thus, the film is also suitable for a thin-walled container, and thus the heat-shrinkable film that can wrap a wider range of the objects than before is provided.
Further, the heat-shrinkable polyester-based film of the present invention includes not only a single-layer heat-shrinkable polyester-based film but also a laminate heat-shrinkable film with the heat-shrinkable polyester-based film of the present invention and a different resin layer.
Additionally, a packaging covered with the label produced by the heat-shrinkable polyester-based film of the present invention has a beautiful appearance.

DESCRIPTION OF EMBODIMENTS

Hereinafter, the heat-shrinkable polyester-based film of the present invention will be explained in detail. The method for producing the heat-shrinkable polyester-based film will be explained in detail later. The heat-shrinkable film is usually produced by unwinding and stretching a roll or the like. At this time, the direction in which the film is unwound is determined as a longitudinal direction, and the direction orthogonal to the longitudinal direction is determined as a width direction of the film. Therefore, the width direction of the heat-shrinkable polyester-based film as shown below means a direction orthogonal to a direction of unwinding the roll, and the longitudinal direction of the film means a direction parallel to the direction of unwinding the roll.
One of the methods for producing a film with higher shrinkage is to increase an amount of a monomer component constituting a unit that can form an amorphous component in the film (hereinafter, simply called as "amorphous component"). In the film produced by a conventional transversely uniaxially stretching method, a shrinkage ratio was found to be increased corresponding with an increase of the amount of the amorphous component. However, although the film could be made to shrink highly by simply increasing the amount of the amorphous component, it was found that an aging treatment caused problems such as an increase in the natural shrinkage ratio, and a decrease in the shrinkage ratio measured at a low temperature of about 70°C. Additionally, it was found that the increase of the amount of the amorphous component deteriorated an irregularity of thickness and an appearance of the film product roll. Therefore, the present inventors focused on the diethylene glycol (hereinafter, simply called as "DEG").
When the amount of diethylene glycol increases, heat resistance will deteriorate, and an amount of the extruded defects will increase when melt-extruding. Thus, the diethylene glycol has not been actively used in the past. However, the present inventors found that a stretching stress when stretching the film would decrease, and further a decrease in the shrinkage ratio measured at a low temperature of about 70°C after the aging treatment would be suppressed by selecting diethylene glycol as a constituent unit of the polyester resin.

An amorphous copolymerized polyester used for producing the heat-shrinkable polyester-based film of the present invention contains an ethylene terephthalate unit as a main component. The phrase "containing as a main component" refers to comprising 50 mol% or more of the ethylene terephthalate in the whole amount of constituent components. The content of the ethylene terephthalate unit is preferably 50 mol% or more, more preferably 60 mol% or more, and further preferably 70 mol% or more in a constituent component of the polyester 100 mol%.

Examples of other dicarboxylic acid components other than terephthalic acid constituting the polyester may include aromatic dicarboxylic acids such as isophthalic acid, orthophthalic acid and 2,6-naphthalenedicarboxylic acid; aliphatic dicarboxylic acids such as adipic acid, azelaic acid, sebacic acid, and decanedicarboxylic acid; and alicyclic dicarboxylic acids such as 1,4-cyclohexanedicarboxylic acid. The content of the terephthalic acid component is 90 mol% or more, and more further preferably 95 mol% or more in a polyol component 100 mol% and a polycarboxylic acid component 100 mol% (in other words, total 200 mol%) in whole amount of the polyester resin. In the present invention, it is most preferable that the polyester resin does not contain other dicarboxylic acid components other than terephthalic acid (in other words, terephthalic acid 100 mol%).

Here, an interpretation of the term "that can form an amorphous component" will be explained in detail.

In the present disclosure, the "amorphous polymer" specifically refers to the case where no endothermic peak due to fusion is shown in measurement with a differential scanning calorimeter (DSC). Since the crystallization of the amorphous polymer does not substantially proceed, the amorphous polymer cannot be in a crystalline state or has an extremely low degree of crystallinity even when crystallized.

Furthermore, in the present disclosure, the "crystalline polymer" refers to a polymer other than the above-mentioned "amorphous polymer", that is, the case where an endothermic peak due to fusion is shown in measurement with a differential scanning calorimeter (DSC). The crystalline polymer means a polymer that can be crystallized when heated, has a crystallizable property, or has been already crystallized.

In general, as for a polymer being in a state where a plurality of monomer units are bonded, when the polymer has various conditions such as low stereoregularity of a polymer, poor symmetry of a polymer, a large side chain of a polymer, a large number of branches of a polymer, and low intermolecular cohesion between polymers, the polymer becomes amorphous. However, depending on the existence state, the crystallization sufficiently proceeds, and the polymer may become crystalline polymer. For example, even for a polymer having a large side chain, when the polymer is composed of a single monomer unit, the crystallization of the polymer may sufficiently proceed, and the polymer may become crystalline. For this reason, even if the polymer is composed of the same monomer unit, the polymer can become crystalline or can become amorphous. Therefore, in the present disclosure, the expression "unit derived from a monomer that can form an amorphous component" is used.

The monomer unit in the present disclosure means a repeating unit constituting a polymer induced from one polyol molecule and one polycarboxylic acid molecule.

In case where a monomer unit consisting of terephthalic acid and ethylene glycol (ethylene terephthalate unit) is the main monomer unit that constituting the polymer, the unit derived from a monomer that can form an amorphous component is exemplified by a monomer unit consisting of isophthalic acid and ethylene glycol; a monomer unit consisting of terephthalic acid and neopentyl glycol; a monomer unit consisting of terephthalic acid and 1,4-cyclohexanedimethanol; and a monomer unit consisting of isophthalic acid and butanediol.

Further, the polyester does not contain a polycarboxylic acid having 3 or more valences (for example, trimellitic acid, pyromellitic acid and anhydrides thereof), preferably. The heat-shrinkable polyester-based films produced by using the polyester containing these polycarboxylic acids are less likely to have a required high shrinkage ratio.

Examples of a diol component constituting the polyester of the present disclosure other than the ethylene terephthalate unit include aliphatic diols such as 1,3-propanediol, 2,2-diethyl-1,3-propanediol, 2-n-butyl-2-ethyl-1,3-propanediol, 2,2-isopropyl-1,3-propanediol, 2,2-di-n-butyl-1,3-propanediol, 1,4-butanediol, hexanediol, neopentyl glycol, and hexanediol; alicyclic diols such as 1,4-cyclohexanedimethanol; and aromatic diols such as bisphenol A.

The amorphous copolymerized polyester for producing the heat-shrinkable polyester-based film of the present invention needs to contain a constituent unit derived from diethylene glycol. The copolymerized polyester raw material comprises the constituent unit derived from diethylene glycol by preferably 7 mol% or more, more preferably 8 mol% or more, further preferably 9 mol% or more, and more further preferably 10 mol% or more in the constituent unit 100 mol% of the polyester. The upper limit of the constituent unit derived from diethylene glycol is preferably 15 mol% or less, more preferably 14 mol% or less, and further preferably 13 mol% or less. A constituent unit derived from diethylene glycol is preferable since it is a component that lowers a glass transition temperature of the polyester and increases a heat-shrinkage ratio of the heat-shrinkable polyester-based film measured at a low temperature. Additionally, it is preferable if the raw material comprises a constituent unit derived from diethylene glycol by 7 mol% or more, since the effects of the present invention such as a decrease in the shrinkage ratio measured at 70°C after the aging treatment or a decrease in the shrinkage stress would be improved. Contrarily, it is not preferable if the raw material comprises a diethylene glycol component by more than 15 mol%, since the effect of improving a decrease in the shrinkage ratio measured at 70°C after the aging treatment would be small, and the deterioration and the defects would increase in the film.

Further, the polyester may comprise a sum of the amorphous component by 15 mol% or more, preferably 16 mol% or more, and more preferably 17 mol% or more in a polyol component 100 mol% and a polycarboxylic acid component 100 mol% (in other words, total 200 mol%) in whole amount of the polyester resin. The upper limit of the sum of the amorphous component may be 30 mol% or less, preferably 29 mol% or less, and more preferably 28 mol% or less. By controlling an amount of the constituent unit derived from diethylene glycol or the amorphous component within the above range, the polyester having a glass transition temperature (Tg) adjusted to 60 to 70°C may be obtained. If Tg is low, molecules in the film will move at room temperature, and the physical properties of the film will change. Therefore, Tg is preferably 61°C or higher, and more preferably 62°C or higher. Contrarily, if Tg is high, the hot-water heat shrinkage ratio at 70°C would be lower. Therefore, Tg is preferably 69°C or lower, and more preferably 68°C or lower.

The polyester does not comprise a diol having 8 or more carbon atoms (for example, octanecliol, etc.), or a polyol having 3 or more valences (for example, trimethylolpropane, trimethylolethane, glycerin, diglycerin, etc.), preferably. The heat-shrinkable polyester-based film, which is made from the polyester comprising these diols or the polyol, is less likely to have a required high shrinkage ratio. Further, the polyester does not comprise triethylene glycol or polyethylene glycol as much as possible. Additionally, the polyester preferably has a copolymerized amorphous component in a polyol component 100 mol% and a polycarboxylic acid component 100 mol% (in other words, total 200 mol%) in whole polyester resin. Copolymerization will eliminate a concern about segregation of the raw materials. Thereby, a change in physical properties of the film can be prevented due to fluctuation in the raw material composition of the film. Further, copolymerization will promote transesterification, and an amount of the amorphous component will increase. That will work in favor of increasing the shrinkage ratio in the main shrinkage direction.

If necessary, the resin constituting the heat-shrinkable polyester-based film of the present invention may contain various additives such as a wax, an antioxidant, an antistatic agent, a crystal nucleating agent, a viscosity reducing agent, a thermal stabilizer, a coloring pigment, an anti-coloring agent, and an ultraviolet absorber.

The resin constituting the heat-shrinkable polyester-based film of the present invention preferably contains fine particles as a lubricant for improving workability (slipperiness) of the film. As the fine particles, those of an arbitrary substance may be used. Examples of inorganic fine particles may include silica, alumina, titanium dioxide, calcium carbonate, kaolin, barium sulfate. Examples of organic fine particles may include acrylic resin particles, melamine resin particles, silicone resin particles, cross-linked polystyrene particles. The average particle size of the fine particles may be appropriately selected within a range of $0.05\mu m$ to $3.0\mu m$ (when measured by Coulter counter) as needed.

In the case of silica, if the content is, for example, 50ppm or more and 3000ppm or less, the average particle size of the fine particles may be controlled within the above range. The content of silica is preferably 200ppm or more, and more preferably 300ppm or more. If the content of silica is too high, transparency may be impaired. Thus, for the film that requires transparency, the content of silica is preferably 2000ppm or less, and more preferably 1500ppm or less.

A method of blending the above fine particles in the resin constituting the heat-shrinkable polyester-based film is, for example, that the fine particles may be added at an arbitrary stage in the production of the polyester-based resin. It is preferable that a slurry of the fine particles dispersed in ethylene glycol or the like can be added at a stage of esterification or at a stage after completion of ester exchange reaction and before start of polycondensation reaction, and then polycondensation reaction can be advanced. Further, a preferable blending method may also include a method in which a slurry of fine particles dispersed in ethylene glycol, water, or other solvent and raw materials of polyester-based resin are mixed using a kneading extruder with a vent, and a method in which dried fine particles and raw materials of polyester-based resin are mixed using a kneading extruder.

The heat-shrinkable polyester-based film of the present invention may be subjected to a corona treatment, a coating treatment, a flame treatment or the like for improving an adhesive property of a film surface.

Next, the characteristics of the amorphous copolymerized polyester raw material and the heat-shrinkable polyester-based film of the present invention will be described.

The amorphous copolymerized polyester raw material of the present disclosure preferably has an intrinsic viscosity of 0.6 dl/g or more and less than 0.7 dl/g. By controlling the intrinsic viscosity within the above range and combining with the melt-extruding condition descried later, the intrinsic viscosity of the heat-shrinkable polyester-based film can be controlled within 0.57 dl/g or more and 0.67 dl/g or less.

It is not preferable if the intrinsic viscosity of the heat-shrinkable polyester-based film falls under 0.57 dl/g, since the stretching in the process for producing the film would be difficult. Thus, the so-called "breakage" phenomenon would occur, and a productivity would deteriorate. The intrinsic viscosity of heat-shrinkable polyester-based film is preferably 0.59 dl/g or more, and more preferably 0.61 dl/g or more. There is no problem if the intrinsic viscosity of the heat-shrinkable polyester-based film exceeds 0.67 dl/g. However, since the upper limit of the intrinsic viscosity of the raw material is 0.7 dl/g, the upper limit of the intrinsic viscosity of the film is set to 0.67 dl/g. By controlling the upper limit of the intrinsic viscosities of the amorphous copolymerized polyester raw material and the heat-shrinkable polyester-based film within the above range, as explained above, the stretching stress in the longitudinal direction could be decreased and the necking force in the direction orthogonal to the stretched direction could be suppressed, especially when producing the heat-shrinkable film with a longitudinal direction as a main shrinkage direction by stretching between rolls. Thereby, the film with a low shrinkage stress in the longitudinal direction and a small irregularity of thickness may be produced.

The amorphous copolymerized polyester raw material of the present disclosure preferably has a melt viscosity of 180 Pa·S or less measured at a shear rate of 6080/S at 250°C. Additionally, the raw material preferably has a melt viscosity of 350 Pa·S or less measured at a shear rate of 6080/S at 230°C. If the melt viscosity is high, the resin temperature would need to be set high for extruding. However, when using the raw material having a large amount of diethylene glycol like the present disclosure, a high resin temperature is not preferable, since the defects in the films or the sheets after extruding film would increase. Therefore, the resin temperature is preferably 240°C or lower, and more preferably 230°C or lower. The lower limit of the resin temperature equals to a melting point of the raw material. However, the melting point of the raw material of the present disclosure may not be clear, thus the lower limit is set to 210°C since the raw material will be melted at 210°C.

Further, it is not preferable if the melt viscosity measured at 250°C exceeds 180 Pa·S or if the melt viscosity measured at 230°C exceeds 350 Pa·S, since a load on a melt-extruding machine for the raw material will increase and a huge equipment will be required. The melt viscosity measured at 230°C is preferably 330 Pa·S or less, and more preferably 310 Pa·S or less. Contrarily, it is not preferably if the melt viscosity is low, since a shear stress will be decreased at a discharge part of a molten resin and will cause an irregularity of thickness. The melt viscosity measured at 250°C is preferably 100 Pa·S or more, and more preferably 110 Pa·S or more.

The heat-shrinkable polyester-based film of the present invention has a heat shrinkage ratio (in other words, a hot-water heat shrinkage ratio at 90°C) of 55% or more and 85% or less in the width direction (main shrinkage direction) of the film, which is measured by immersing the film in hot water of 90°C for 10 seconds under no load, thereafter immediately immersing in water of 25°C±0.5°C for 10 seconds, and calculating using lengths before and after shrinkage according to the following Equation 1.

$$\text{Heat-shrinkage ratio} = \{(\text{Length before shrinkage} - \text{Length after shrinkage})/ \text{Length before shrinkage}\} \times 100\ (\%) \qquad \text{Equation 1}$$

If the hot-water heat shrinkage ratio in the main shrinkage direction at 98°C falls below 55%, a demand for a high shrinkable film covering the entire container (so-called "full label") could not be met. Further, when the film is used as a label, since an amount of the shrinkage is small, strain, insufficient shrinkage, wrinkles, or slack will occur on the label after heat shrinkage. The hot-water heat shrinkage ratio at 90°C is preferably 58% or more, and more preferably 61% or more. Since there are few demands for a film with a hot-water heat shrinkage ratio in the main shrinkage direction at 90°C exceeding 85%, the upper limit of the hot-water heat shrinkage ratio is set to 85%.

Further, the heat-shrinkable polyester-based film of the present invention has a hot-water heat shrinkage ratio at 80°C, which is measured in the same manner as the above, in an orthogonal direction to the main shrinkage direction of the film (longitudinal direction) of -10% or more and 1% or less. It is not preferable if the hot-water heat shrinkage ratio in the orthogonal direction to the main shrinkage direction at 80°C falls under -10%, since when used as a label for a container, an amount of a film elongation is too large due to heating, resulting in a poor shrinkage appearance. Contrarily, it is not preferable if the hot-water heat shrinkage ratio in the orthogonal direction to the main shrinkage direction at 80°C exceeds 1%, since the heat-shrinkable label would have wrinkles or a strain like rice grains. The upper limit of the hot-water heat shrinkage ratio in the orthogonal direction to the main shrinkage direction at 80°C is preferably 0% or less.

The heat-shrinkable polyester-based film of the present invention has a maximum shrinkage stress measured under 90°C hot air of 2 MPa or more and 7 MPa or less in the main shrinkage direction of the film. The shrinkage stress is measured by the method described in EXAMPLES.

It is not preferable if the maximum shrinkage stress at 90°C in the main shrinkage direction of the film exceeds 7 MPa, since shrinkage stress would cause the thin-walled container to deform during shrinkage although there is no problem with containers such as PET bottles. The maximum shrinkage stress at 90°C is preferably 6 MPa or less, and more preferably 5 MPa or less. Contrarily, it is not preferable if the maximum shrinkage stress at 90°C in the main shrinkage direction of the film falls under 2 MPa, since when used as a label for a container, the label would be loose and would not adhere to the container. The maximum shrinkage stress at 90°C is preferably 2.5 MPa or more, and more preferably 3 MPa or more.

The heat-shrinkable film made from the amorphous copolymerized polyester raw material of the present disclosure, when the film has a thickness of 30μm, has a number of defects in 1mm size or more in the longitudinal direction of the film or in the width direction of the film of 1.5 or less per 10 square meters. It is not preferable if the number of defects exceeds 1.5, since an ink would penetrate from the defects when printing, resulting in poor appearance after printing. The number of defects in the longitudinal direction of the film or in the width direction of the film per 10 square meters is preferably 1 or less, and more preferably 0.5 or less.

The heat-shrinkable polyester-based film of the present invention preferably has a difference of a hot-water heat shrinkage ratio measured by immersing the film for 10 seconds in 70°C hot water in the main shrinkage direction of 0% or more and 5% or less between the film after being subjected to an aging treatment for 672 hours at a temperature of 30°C and a humidity of 65% and the film before being subjected to the aging treatment (following Equation 2). It is not preferable if the difference of the hot-water heat shrinkage ratio in 70°C hot water before and after the aging treatment is big, since a temperature condition during a process for shrinking the film to produce a label will be different before and after the aging treatment. In particular, when the films before and after the aging treatment are mixed depending on a stock status, an appearance of shrinkage finishing properties would be different by industrially and continuously heat-shrinking the film. The difference of a hot-water heat shrinkage ratio measured by immersing the film for 10 seconds in 70°C hot water between the film after being subjected to an aging treatment and the film before being subjected to the aging treatment is preferably 4% or less, and more preferably 3% or less. The most preferable is that the hot-water heat shrinkage ratio does not change before and after the aging treatment, thus the lower limit is set to 0%.

Difference of heat-shrinkage ratio = (Hot-water heat shrinkage ratio before aging treatment - Hot-water heat shrinkage ratio after aging treatment) (%)                                       Equation 2

The heat-shrinkable polyester-based film of the present invention preferably has an irregularity of thickness per 1m length shown in Equation 3 of 10% or less in the longitudinal direction of the film product and in the width direction of the film product. It is not preferable if the irregularity of thickness exceeds 10%, wrinkles or meanderings will cause misregistration when the product roll is subjected to printing or processing. The irregularity of thickness is preferably 8% or less, and more preferably 6% or less.

Irregularity of thickness = (Maximum thickness - Minimum thickness)/Average thickness $\times$ 100 (%)                    Equation 3

The thickness of the heat-shrinkable polyester-based film of the present invention is not particularly limited, and preferably 5μm or more and 50pm or less. The lower limit of the thickness is preferably 6pm.

The heat-shrinkable polyester-based film of the present invention can be produced by melt-extruding the polyester raw material using an extruder to form an unstretched film, and followed by subjecting to stretching in the width direction. The polyester can be produced by conducting polycondensation of the suitable dicarboxylic acid component and the diol component as mentioned above by known methods. Further, as a raw material of the film, chip-shaped polyester may be usually used.

When the raw material resin is melt-extruded, the polyester raw material may be preferably dried using a dryer such as a hopper dryer and a paddle dryer, or a vacuum dryer. The polyester raw material is dried as described above, then melted at a temperature of 230 to 270°C and extruded into a film by using an extruder. At the extrusion, an arbitrary conventional method such as a T-die method and a tubular method may be used.

Subsequently, the film that is molten through extrusion can be quenched to produce an unstretched film. As a method of quenching the molten resin, a method in which a molten resin is cast on a rotary drum from a die to quench and solidify the cast resin to produce a substantially unoriented resin sheet may be suitably used.

For forming an arbitrary main shrinkage direction on the produced unstretched resin sheet, a lengthwise stretching or a transverse stretching may be conducted.

(Lengthwise stretching and relaxation after lengthwise stretching)

When a film is formed by lengthwise stretching, properties of the copolymerized polyester of the present disclosure can be more advantageously exhibited by adopting the following methods (1) and (2).

(1) Control of lengthwise stretching conditions

The transverse stretching is conducted using a speed difference between rolls. Preferably, the film is preheated to a temperature of Tg or higher and Tg+20°C or lower on a heated roll, and an infrared heater is used to raise the temperature of the film to a temperature 5°C to 20°C higher than the temperature on the roll to stretch the film by 3.5 to 6 times using the speed difference. It is not preferable if the temperature of the film on the roll falls under the temperature of Tg, since the stretching stress becomes high during stretching, thereby causing breakage. It is not preferable if the temperature of the film on the roll is higher than the temperature of Tg+20°C, since the film adheres to the roll, thereby increasing the irregularity of thickness.

Further, it is preferred that the stretching temperature of the film be raised within the above range using an infrared heater or the like. This is because, in the lengthwise stretching to stretch the film between the rolls, the deformation speed during stretching becomes high due to a short stretching interval. Contrarily, in order to improve the thickness, it is preferred that a stress ratio of a stress-strain curve (tensile stress at the time of final stretching / stress at upper yield point) be high. Therefore, when the stretching temperature is high, the stress at upper yield point becomes low, and this is preferable since the stress ratio of the stress-strain curve can be controlled within an appropriate range.

(2) Relaxation in longitudinal direction after lengthwise stretching

After lengthwise stretching, a film is desirably subjected to a heat treatment and relaxation in the longitudinal direction (0% is without relaxation). The shrinkage ratio in the longitudinal direction is slightly reduced by relaxation, but the molecular orientation is relaxed in the longitudinal direction, so that the shrinkage stress can be reduced. Furthermore, the molecular orientation is relaxed by conducting a heat treatment at a temperature higher than the stretching temperature, so that the shrinkage stress can be reduced. As for a heat treatment method, for example, a heated furnace may be used or the roll temperature after MD stretching may be raised to heat the film.

(Transverse stretching and relaxation after transverse stretching)

When a film is formed by transverse stretching, properties of the copolymerized polyester of the present disclosure can be more advantageously exhibited by adopting the following methods (3) and (4).

(3) Control of transverse stretching conditions

The transverse stretching is conducted preferably such that the film is preheated to a temperature of Tg+10°C or higher and Tg+25°C or lower in a state where both edges in the width direction of the film are held by clips in a tenter, and then, the film is stretched by 3.5 to 6 times in the width direction while cooling the film to a temperature of Tg or higher and Tg+9°C or lower. By stretching the film in the width direction while cooling, a stress ratio of a stress-strain curve (tensile stress at the time of final stretching / stress at upper yield point) becomes high, and the irregularity of thickness in the width direction can be reduced. After the transverse stretching, it is preferred to conduct a heat treatment at a temperature of the stretching temperature+1°C to the stretching temperature+10°C. It is not preferable if the heat treatment temperature is lower than the stretching temperature, since the molecular orientation is not sufficiently relaxed, so that the shrinkage stress cannot be reduced. Further, it is not preferable if the heat treatment temperature is higher than the stretching temperature+10°C, since the shrinkage ratio in the width direction may decrease.

(4) Relaxation in the width direction after transverse stretching

In a heat treatment step, it is preferable to relax a film by 0% to 5% in the width direction in a state where both edges in the width direction of the film are held by clips in a tenter (0% is without relaxation). A shrinkage ratio in the width direction is slightly reduced by relaxation, but the molecular orientation is relaxed in the width direction, so that the shrinkage stress can be reduced. Furthermore, in a final heat treatment step, the film is subjected to a heat treatment at a temperature higher than the stretching temperature, whereby the molecular orientation is relaxed, and the shrinkage stress can be reduced.

The packaging bag of the present invention is produced by covering at least a part of a periphery of an object for packaging with a label having perforations or notches prepared from the heat-shrinkable polyester-based film of the present invention, followed by subjecting to a heat-shrinking treatment. Examples of the object for packaging include PET bottles for beverages, various kinds of bottles, cans, plastic containers for confectionary, a box lunch and the like, paper-made boxes, and the like. In general, when the object for packaging is covered by heat-shrinking of the label prepared from the heat-shrinkable polyester-based film, the label is heat-shrunk by about 5 to 70% to be closely adhered to the packaging bag. The label for covering the object for packaging may be printed or may not be printed.

A method for producing a label from the heat-shrinkable polyester-based film of the present invention is as follows; an organic solvent is applied on the inside slightly from the end part of one surface of a rectangular film, and the film is immediately rounded to stack and bond the end parts and formed into a label, or an organic solvent is applied on the inside slightly from the end part of one surface of a film wound as a roll, the film is immediately rounded to stack and bond the end parts and form into a tube, and the tube-formed film is cut into a label. As the organic solvent for bonding, cyclic ethers such as 1,3-dioxolan and tetrahydrofuran are preferable. Besides, there may be used aromatic hydrocarbons such as benzene, toluene, xylene and trimethylbenzene; halogenated hydrocarbons such as methylene chloride and chloroform; phenols such as phenol, or a mixture thereof.

EXAMPLES

Next, the present invention will be specifically described with reference to Examples and Comparative examples. The evaluation method of the films is shown below.

[Heat-shrinkage ratio (hot-water heat shrinkage ratio)]

Film was cut to give a 10cm × 10cm square sample. The square sample was immersed in hot water of a predetermined temperature (°C) ±0.5°C for 10 seconds under no load inducing heat shrinkage, thereafter in water of 25°C ±0.5°C for 10 seconds, and then taken out from water. Subsequently, a size of the sample in the longitudinal direction and in the width direction was determined, and the heat-shrinkage ratio was calculated according to the following Equation 1.

Heat-shrinkage ratio = {(Length before shrinkage - Length after shrinkage)/ Length before shrinkage} × 100 (%)         Equation 1

[Difference of heat-shrinkage ratio before and after aging treatment]

Hot-water heat shrinkage ratio shrinkage ratio at 70°C was calculated in the same manner as in the Equation 1. Subsequently, an unmeasured film was subjected to an aging treatment in an environmental test lab at 30°C and a relative humidity of 65% for 672 hours, and thereafter a hot-water heat shrinkage ratio shrinkage ratio at 70°C of the film was also calculated. Difference of heat-shrinkage ratio was calculated according to the following Equation 2, respectively.

Difference of heat-shrinkage ratio = (Hot-water heat shrinkage ratio before aging treatment - Hot-water heat shrinkage ratio after aging treatment) (%)         Equation 2

[Shrinkage stress]

A rectangular sample having a length of 200mm in a main shrinkage direction (width direction) and a width of 20mm was cut out from a heat-shrinkable film, and a shrinkage stress was measured using a strength and elongation measuring machine with a heating furnace manufactured by Toyo Baldwin Co., Ltd. (current company name ORIENTEC Co., Ltd.; TENSILON universal testing machine PTM-250, registered trademark of ORIENTEC Co., Ltd.). The heating furnace of the strength and elongation measuring machine was previously heated to 90°C, and the distance between chucks for holding the sample was set to 100mm. When the sample is attached to the chucks of the strength and elongation measuring machine, the ventilation to the heating furnace was temporarily stopped, and the door of the heating furnace was opened. The position of 25mm from the both edges of the sample with a length of 150mm was held by the chucks, and the distance between the chucks was set to 100mm. The sample was fixed without looseness so that the distance between the chucks and the length direction of the sample were aligned and the sample was horizontal. After attaching the sample to the chucks, the doors of the heating furnace were quickly closed, followed by resuming the ventilation. The time when closing the doors of the heating furnace and resuming the ventilation was determined as the time when the measurement of the shrinkage stress was started. The maximum value after the measurement for 30 seconds was determined as a shrinkage stress (MPa).

[Irregularity of thickness]

The film was cut to give a rectangular sample with a size of 1m in the desired direction × 40mm in the width direction. Using a continuous contact type thickness gauge manufactured by Mikuron Measuring Instrument Co., Ltd., the thickness was continuously measured at a measuring speed of 5 m/min along the longitudinal direction of the sample. Irregularity of thickness of the film was calculated according to the following Equation 3.

Irregularity of thickness = (Maximum thickness - Minimum thickness)/Average thickness × 100 (%)         Equation 3

[Intrinsic viscosity]

The polyester (0.2g) was dissolved in a mixed solvent of phenol/1,1,2,2-tetrachloroethane (50ml, 60/40 (weight ratio)), and the intrinsic viscosity was measured at 30°C using an Ostwald viscometer. The unit was dl/g.

[Melt viscosity]

Using a Capillograph 1D PMD-C manufactured by Toyo Seiki Seisakusho, Ltd., the resin was set to a predetermined temperature (250°C, 230°C), and melt viscosity was measured according to JIS K7199 at a shear rate of 6080/S.

[How to count the number of defects]

The film was cut to give a sample with a size of 50cm in the width direction and 50cm in the longitudinal direction. The cut film was placed on a desktop-type film orientation viewer (manufactured by Unitika Ltd.) and polarized. After that, the number of defects in 1mm size or more was counted using a magnifying glass with a magnification of 10 times. In the same way, the number of defects in a total 120 films (per 30 square meters). Then, the number of defects was determined on an average per 10 square meters according to the following Equation 4.

Number of defects on an average = Number of all defects/3 (defects / per 10 square meters)          Equation 4

[Content of amorphous unit]

A heat-shrinkable film was scraped off with a razor blade and sampled. The sampled film (about 5mg) was dissolved in 0.7ml of a mixed solution of deuterated chloroform and trifluoroacetic acid (in a volume ratio of 9/1). The amount of amorphous units (in the following examples, neopentyl glycol unit and cyclohexanedimethanol unit) was calculated using 1H-NMR (UNITY50 manufactured by Varian), and the mol% thereof (the sum of a ratio of polyol-type amorphous unit when the polyol unit is taken as 100 mol% and a ratio of the polycarboxylic acid-type amorphous unit when the polycarboxylic acid unit is taken as 100 mol%) was determined. A product of the amount (mass%) of polymers in the film and the mol% above was defined as a content of the amorphous units (mol% by mass).

[Tg (Glass transition temperature)]

Using a differential scanning calorimeter (model: DSC220; manufactured by Seiko Instruments Inc.), an unstretched film (5mg) was heated from -40°C to 120°C at a heating rate of 10°C/min. The glass transition temperature was determined from the resulting endothermic curve. Specifically, the temperature of an intersection of an extended line of a base line being lower than the glass transition temperature and a tangent showing a maximum inclination in a transition part was defined as a glass transition temperature (Tg).

[Shrinkage finishing properties]

A heat-shrinkable film was previously subjected to a three-color printing with inks in green, gold and white colors manufactured by Toyo Ink Co., Ltd. Both ends of the printed film were bonded to each other using dioxolane to prepare a cylindrical-shaped label (a label in which the main shrinkage direction of the heat-shrinkable film was a circumferential direction), and the label was cut. The diameter of the label in the shrinkage direction was 70mm. Thereafter, the label was put on a 500ml PET bottle (trunk diameter: 62mm, minimum diameter of neck part: 25mm) and subjected to a heat-shrinking treatment at a zone temperature of 90°C with a passing time of 5 seconds using a steam tunnel (model: SH-1500-L manufactured by Fuji Astec Inc.) to mount the label to the bottle. At the time of mounting, the position of a part with a diameter of 30mm in the neck part was adjusted so as to be at one end of the label. The finishing properties after shrinking were visually evaluated. Criteria for evaluation were as follows.

[Shrinkage strain of label]

For evaluating finishing properties after shrinkage, strain in the direction of 360 degrees at the upper part of the mounted label was measured using a gauge and the maximum value of the strain was determined. The shrinkage strain of the label was evaluated according to the following criteria.

○: maximum strain less than 1.5mm
✕: maximum strain 1.5mm or more

[Insufficient shrinkage of label]

The above shrinkage state of the label was evaluated according to the following criteria.

○: The label was shrunk with no slack between the mounted label and the container.

×: There was a slack between the label and the container due to insufficient shrinkage.

[Wrinkles of label]

Under the same conditions as those for the shrinkage strain of the label mentioned above, the occurrence state of wrinkles was evaluated according to the following criteria.

○: 2 or less wrinkles with a size of 1.5mm or more

×: 3 or more wrinkles with a size of 1.5mm or more

[Shrinkage finishing properties after aging treatment]

A heat-shrinkable film after being subjected to an aging treatment for 672 hours at 30°C and a humidity of 65% was previously subjected to a three-color printing with inks in green, gold and white colors manufactured by Toyo Ink Co., Ltd. Both ends of the printed film were bonded to each other using dioxolane to prepare a cylindrical-shaped label (a label in which the main shrinkage direction of the heat-shrinkable film was a circumferential direction), and the label was cut. The diameter of the label in the shrinkage direction was 70mm. Thereafter, the label was put on a 500ml PET bottle (trunk diameter: 62mm, minimum diameter of neck part: 25mm) and subjected to a heat-shrinking treatment at a zone temperature of 90°C with a passing time of 5 seconds using a steam tunnel (model: SH-1500-L manufactured by Fuji Astec Inc.) to mount the label to the bottle. At the time of mounting, the position of a part with a diameter of 30mm in the neck part was adjusted so as to be at one end of the label. The finishing properties after shrinking were visually evaluated. Criteria for evaluation were as follows.

The finishing properties were evaluated in the same manner as in the above-mentioned "Shrinkage strain of label", "Insufficient shrinkage of label", and "Wrinkles of label".

<Preparation of polyester raw materials>

Raw materials A to H were produced by a known method of a polycondensation through a transesterification using a dimethyl terephthalate (DMT) and each glycol component described below.

Raw material A: a polyester made from neopentyl glycol 25 mol%, diethylene glycol 12 mol%, ethylene glycol 63 mol% and terephthalic acid. intrinsic viscosity: 0.69 dl/g.

Raw material B: a polyester made from neopentyl glycol 30 mol%, diethylene glycol 8 mol%, ethylene glycol 62 mol% and terephthalic acid. intrinsic viscosity: 0.60 dl/g.

Raw material C: a polyester made from neopentyl glycol 18 mol%, diethylene glycol 15 mol%, ethylene glycol 67 mol% and terephthalic acid. intrinsic viscosity: 0.65 dl/g.

Raw material D: a polyester made from neopentyl glycol 25 mol%, diethylene glycol 5 mol%, ethylene glycol 70 mol% and terephthalic acid. intrinsic viscosity: 0.65 dl/g.

Raw material E: a polyester made from neopentyl glycol 11 mol%, diethylene glycol 12 mol%, ethylene glycol 77 mol% and terephthalic acid. intrinsic viscosity: 0.65 dl/g.

Raw material F: a polyester made from neopentyl glycol 18 mol%, diethylene glycol 15 mol%, ethylene glycol 67 mol% and terephthalic acid. intrinsic viscosity: 0.85 dl/g.

In the production of the above polyesters, $SiO_2$ (Silysia 266 manufactured by Fuji Silysia Chemical Ltd.) was added as a lubricant in a proportion of 600ppm relative to the polyesters. In the following Tables, EG represents ethylene glycol, DEG represents diethylene glycol, and NPG represents neopentyl glycol. Each polyester was appropriately formed into a chip shape.

Table 1 and Table 2 show a composition of the polyester raw material used in Examples and Comparative Examples, and a resin composition and a manufacturing condition of the film in Examples and Comparative Examples, respectively.

[Table 1]

| | Dicarboxylic acid components (mol%) | Polyol components (mol%) | | | Added amount of lubricant (ppm) | Tg (°C) | Intrinsic viscosity (dl/g) | 250°C Melt viscosity (Pa·S) | 230°C Melt viscosity (Pa·S) |
|---|---|---|---|---|---|---|---|---|---|
| | DMT | EG | DEG | NPG | | | | | |
| Raw material A | 100 | 63 | 12 | 25 | 600 | 68 | 0.69 | 140 | 270 |
| Raw material B | 100 | 62 | 8 | 30 | 600 | 69 | 0.60 | 120 | 210 |
| Raw material C | 100 | 67 | 15 | 18 | 600 | 67 | 0.65 | 130 | 240 |
| Raw material D | 100 | 70 | 5 | 25 | 600 | 71 | 0.65 | 135 | 260 |
| Raw material E | 100 | 77 | 12 | 11 | 600 | 68 | 0.65 | 130 | 245 |
| Raw material F | 100 | 67 | 15 | 18 | 600 | 67 | 0.85 | 200 | 400 |

[Table 2]

| | Used raw material | Resin temperature in extruder (°C) | Lengthwise stretching | | | | | Transverse stretching | | | | |
|---|---|---|---|---|---|---|---|---|---|---|---|---|
| | | | Temperature of preheated roll (°C) | Film temperature during stretching (°C) | Stretch ratio | Temperature of the roll after stretching (°C) | Relaxation ratio in the longitudinal direction (%) | Temperature during preheating (°C) | Temperature during stretching (°C) | Stretch ratio | Heat treatment temperature (°C) | Relaxation ratio in the width direction (%) |
| Example 1 | A | 230 | 75 | 90 | 5 | 80 | 3 | Not performed | | | | |
| Example 2 | B | 230 | 76 | 91 | 5 | 81 | 3 | Not performed | | | | |
| Example 3 | C | 230 | 74 | 89 | 5 | 79 | 3 | Not performed | | | | |
| Example 4 | A | 230 | Not performed | | | | | 90 | 78 | 5 | 84 | 3 |
| Example 5 | B | 230 | Not performed | | | | | 91 | 79 | 5 | 85 | 3 |
| Example 6 | C | 230 | Not performed | | | | | 89 | 77 | 5 | 83 | 3 |
| Comparative Example 1 | D | 230 | 78 | 93 | 5 | 83 | 3 | Not performed | | | | |
| Comparative Example 2 | E | 230 | 75 | 90 | 5 | 80 | 3 | Not performed | | | | |
| Comparative Example 3 | F | 270 | 74 | 89 | 5 | 79 | 3 | Not performed | | | | |

Example 1

The raw material A was charged into an extruder. This resin was melted at 270°C, extruded from a T die while cooling the resin to 230°C, and quenched by winding around a rotating metal roll set at a surface temperature of 25°C to produce an unstretched film with a thickness of 146$\mu$m. The take-off speed (rotation speed of the metal roll) of the unstretched film at this time was about 20 m/min. Tg of the unstretched film was 68°C. The produced unstretched film was introduced to a lengthwise drawing machine, preheated with a roll having a surface temperature of Tg+7°C, and stretched by 5 times at a film temperature of Tg+22°C using an infrared heater. The film after lengthwise stretching was introduced to heating rolls having a surface temperature of Tg+12°C after stretching, and relaxed by 3% in the longitudinal direction using the speed difference between the rolls. The relaxed film was cooled with a cooling roll having a surface temperature of Tg-40°C. Afterward, both edge parts of the film were cut and removed so that the width of the film became 500mm, and the film was wound into a roll, whereby a lengthwise uniaxially-oriented film with a thickness of 30$\mu$m was continuously produced in a prescribed length. The film was evaluated for various characteristics in the above-mentioned manner. The evaluation results are shown in Table 3. The film had little changes in physical properties before and after the aging treatment and thus exhibited favorable results.

Example 2

A film with a thickness of 30$\mu$m was produced in the same manner as in Example 1, except that the raw material A was changed to the raw material B. Tg of the film was 69°C. The evaluation results are shown in Table 3. The film exhibited favorable results similar to those of Example 1.

Example 3

A film with a thickness of 30$\mu$m was produced in the same manner as in Example 1, except that the raw material A was changed to the raw material C. Tg of the film was 67°C. The evaluation results are shown in Table 3. The film exhibited favorable results similar to those of Example 1.

Example 4

The raw material A was charged into an extruder. This resin was melted at 270°C, extruded from a T die while cooling the resin to 230°C, and quenched by winding around a rotating metal roll set at a surface temperature of 25°C to produce an unstretched film with a thickness of 146$\mu$m. The take-off speed (rotation speed of the metal roll) of the unstretched film at this time was about 20 m/min. Tg of the unstretched film was 68°C. The produced unstretched film was introduced to a tenter, preheated so that a film temperature was Tg+17°C. Thereafter, the film was stretched by 5 times in the width direction while cooling the film to a surface temperature of Tg+5°C. After that, the film was relaxed by 3% in the width direction while being heated so that a surface temperature of the film was Tg+11°C. Afterward, the relaxed film was cooled. Both edge parts of the film were cut and removed so that the width of the film became 1000mm, and the film was wound into a roll, whereby an uniaxially-oriented film with a thickness of 30$\mu$m was continuously produced in a prescribed length. The film was evaluated for various characteristics in the above-mentioned manner. The evaluation results are shown in Table 3. The film had little changes in physical properties before and after the aging treatment and thus exhibited favorable results.

Example 5

A film with a thickness of 30$\mu$m was produced in the same manner as in Example 4, except that the raw material A was changed to the raw material B. Tg of the film was 69°C. The evaluation results are shown in Table 3. The film exhibited favorable results similar to those of Example 4.

Example 6

A film with a thickness of 30$\mu$m was produced in the same manner as in Example 1, except that the raw material A was changed to the raw material C. Tg of the film was 67°C. The evaluation results are shown in Table 3. The film exhibited favorable results similar to those of Example 4.

Comparative Example 1

A film with a thickness of 30$\mu$m was produced in the same manner as in Example 1, except that the raw material A was changed to the raw material D. The evaluation results are shown in Table 3. Compared to Example 1, the shrinkage finishing properties before the aging treatment was good, however, the shrinkage ratio at 70°C in the longitudinal direction after the aging treatment was low (a decrease due to the aging treatment was large). Thus, the shrinkage finishing properties were bad when the shrinkage finishing was performed under the same condition as before the aging treatment.

Comparative Example 2

A film with a thickness of $30\mu$m was produced in the same manner as in Example 1, except that the raw material A was changed to the raw material E. The evaluation results are shown in Table 3. Compared to Example 1, the shrinkage ratio at 90°C in the longitudinal direction was low, and the shrinkage finishing properties were bad.

Comparative Example 3

The raw material A was changed to the raw material F. Further, the raw material was melted and extruded at 270°C. This is because, due to the high intrinsic viscosity of the raw material, if a temperature in an extruding step was low, a load on an extruding machine increased and extrusion became difficult. A film with a thickness of $30\mu$m was produced in the same manner as in Example 3 except for them. The evaluation results are shown in Table 3. Compared to Example 3, the shrinkage stress was high, and the shrinkage finishing properties were bad. Additionally, there were a lot of defects.

[Table 3]

| | Before aging areatment | | | | | | | | | | | |
| | Film intrinsic viscosity (dl/g) | Thickness (μm) | Shrinkage ratio (%) | | | Shrinkage stress in the main shrinkage direction (MPa) | Irregularity of thickness in the longitudinal direction (%) | Irregularity of thickness in the width direction (%) | Shrinkage strain of label | Insufficient shrinkage of label | Wrinkles of label | Number of defects in 1mm size or more (defects/10m$^2$) |
| | | | 70°C Main shrinkage direction | 80°C Non-shrinking direction | 90°C Main shrinkage direction | | | | | | | |
|---|---|---|---|---|---|---|---|---|---|---|---|---|
| Example 1 | 0.66 | 30 | 45 | -3 | 75 | 4.4 | 4 | 5 | ○ | ○ | ○ | 0.3 |
| Example 2 | 0.57 | 30 | 39 | -2 | 80 | 5 | 4 | 5 | ○ | ○ | ○ | 0.3 |
| Example 3 | 0.62 | 30 | 47 | -4 | 65 | 3.9 | 5 | 5 | ○ | ○ | ○ | 0.7 |
| Example 4 | 0.66 | 30 | 35 | -7 | 80 | 4.1 | 5 | 4 | ○ | ○ | ○ | 0.3 |
| Example 5 | 0.57 | 30 | 33 | -5 | 80 | 3.9 | 4 | 3 | ○ | ○ | ○ | 0.3 |
| Example 6 | 0.62 | 30 | 36 | -8 | 79 | 3 | 5 | 3 | ○ | ○ | ○ | 0.3 |
| Comparative Example 1 | 0.62 | 30 | 28 | 1 | 75 | 6.5 | 3 | 4 | ○ | ○ | ○ | 0.3 |
| Comparative Example 2 | 0.62 | 30 | 30 | -4 | 54 | 3.7 | 4 | 4 | - | × | - | 0.7 |
| Comparative Example 3 | 0.78 | 30 | 50 | -1 | 69 | 7.3 | 3 | 3 | ○ | ○ | × | 2.4 |

EP 3 831 864 B1

| | After aging areatment | | | | | | Difference before and after aging treatment | | |
| --- | --- | --- | --- | --- | --- | --- | --- | --- | --- |
| | Shrinkage ratio (%) | | | Shrinkage strain of label | Insufficient shrinkage of label | Wrinkles of label | Shrinkage ratio (%) | | |
| | 70°C Main shrinkage direction | 80°C Non-shrinking direction | 90°C Main shrinkage direction | | | | 70°C Main shrinkage direction | 80°C Non-shrinking direction | 90°C Main shrinkage direction |
| Example 1 | 43 | -5 | 75 | ○ | ○ | ○ | 2 | 0 | 0 |
| Example 2 | 34 | -4 | 81 | ○ | ○ | ○ | 5 | 0 | 0 |
| Example 3 | 47 | -6 | 65 | ○ | ○ | ○ | 0 | 0 | 0 |
| Example 4 | 31 | -7 | 80 | ○ | ○ | ○ | 4 | 0 | 0 |
| Example 5 | 31 | -5 | 80 | ○ | ○ | ○ | 2 | 0 | 0 |
| Example 6 | 36 | -8 | 79 | ○ | ○ | ○ | 0 | 0 | 0 |
| Comparative Example 1 | 11 | 1 | 75 | × | ○ | × | 17 | 0 | 0 |
| Comparative Example 2 | 30 | -4 | 54 | - | × | - | 0 | 0 | 0 |
| Comparative Example 3 | 49 | 1 | 69 | ○ | ○ | × | 1 | 0 | 0 |

INDUSTRIAL APPLICABILITY

The heat-shrinkable polyester-based film of the present invention not only has a high heat-shrinkage ratio, but also has a small decrease in the heat-shrinkage ratio after an aging treatment and a small number of defects. Thus, the film can be suitably used for a label application. A packaging bag such as containers produced by the label comprising the heat-shrinkable polyester-based film of the present invention has a beautiful appearance. Further, the copolymerized polyester raw material of the present disclosure for amorphous films can be preferably used for producing the heat-shrinkable polyester-based film.

**Claims**

1. A heat-shrinkable polyester-based film comprising an amorphous copolymerized polyester raw material for the film, wherein

    the polyester raw material satisfies the following requirements (1) to (5):

    (1) the copolymerized polyester raw material contains ethylene terephthalate as a main constituent component, and comprises neopentyl glycol by 15 mol% or more and 30 mol% or less when a total amount of glycol component in a total polyester resin component is taken as 100 mol%,
    (2) the copolymerized polyester raw material comprises a constituent unit derived from diethylene glycol by 7 mol% or more and 15 mol% or less in the total amount of glycol component 100 mol% in the total polyester resin component,
    (3) the copolymerized polyester raw material has an intrinsic viscosity of 0.60 dl/g or more and less than 0.70 dl/g, as measured at 30°C on 0.2g dissolved polyester in 50 ml of a 60/40 weight ratio of phenol/1,1,2,2-tetrachloroethane,
    (4) the copolymerized polyester raw material has a glass transition temperature of 60°C or higher and 70°C or lower, as determined by differential scanning calorimetry from -40°C to 120°C at a heating rate of 10°C/min, and
    (5) the content of terephthalic acid component is 90 mol% or more when the total of polycarboxylic acid component in the polyester is taken as 100 mol%;

    wherein when the copolymerized polyester raw material is made into a film having a thickness of 30μm, a number of defects in 1mm size or more in the longitudinal direction of the film or in the width direction of the film is 1.5 or less on an average per 10 square meters of the film, wherein the number of defects is determined as disclosed in the description;
    provided that the amorphous copolymerized polyester raw material is not a polyester of terephthalic acid and a glycol component consisting of 65 mol% ethylene glycol, 10 mol% diethylene glycol and 25 mol% neopentyl glycol, the polyester having a glass transition temperature of 70 °C, an intrinsic viscosity of 0.65 dl/g and a melt viscosity measured in accordance with JIS K7199 at a shear rate of 6080/s at 250°C of 130 Pa·s;
    and provided that the amorphous copolymerized polyester raw material is not a polyester of terephthalic acid and a glycol component consisting of 65 mol% ethylene glycol, 10 mol% diethylene glycol and 25 mol% neopentyl glycol, the polyester having a glass transition temperature of 70 °C, an intrinsic viscosity of 0.65 dl/g, a carboxyl end group concentration AV of 17 eq/t, and a color b value of 5.9; wherein the color b value is measured using a colorimetric color-difference meter from the tristimulus values XYZ expressing the basic stimulation values of the color, and wherein the AV value is determined by the following method:
    a 0.2 g sample being dried at 60°C for 24 hours is precisely weighed and its weight at that time is set to be W in g; to a test tube are added 10 ml of benzyl alcohol and the weighed sample, the test tube is then dipped in an oil bath heated at 205°C and the sample is dissolved therein together with stirring with a glass rod; the sample wherein a dissolving time was set to be 3 minutes, 5 minutes or 7 minutes is referred to as A, B or C, respectively; after that, a test tube is newly prepared, only benzyl alcohol is placed therein and treated under the same process; the sample wherein the dissolving time was set to be 3 minutes, 5 minutes or 7 minutes is referred to as a, b or c, respectively; titration is conducted using a 0.04 mol/l ethanolic solution of potassium hydroxide, a factor of which was known already; Phenol Red is used as an indicator;-a point wherein a color changed from yellowish green to pink is adopted as an end point, and a titrated amount in ml of the potassium hydroxide solution is determined; titrated amounts for the samples A, B and C are referred to as XA, XB and XC in ml, respectively; titrated amounts for the samples a, b and c are referred to as Xa, Xb and Xc in ml, respectively; the titrated amount V in ml wherein the dissolving time was 0 minute was determined by a least-squares method using the titrated amount XA, XB or XC for each dissolving time; similarly, the titrate amount VO in ml was determined using Xa, Xb or Xc; after that, AV is determined in accordance with the following formula

$$AV \ (eq/t) = [(V\text{-}VO) \ X \ NF \ X \ 1000] \ / \ W$$

with

NF: factor of 0.04 mol/l potassium hydroxide solution
W: weight of sample in g.

2. The heat-shrinkable polyester-based film according to claim 1, wherein the copolymerized polyester raw material has a melt viscosity of 180 Pa·s or less measured at a shear rate of 6080/s at 250°C, and a melt viscosity of 350 Pa·s or less measured at a shear rate of 6080/s at 230°C.

3. The heat-shrinkable polyester-based film
according to claim 1 or 2, satisfying the following requirements (1) to (5):

(1) intrinsic viscosity is 0.57 dl/g or more and 0.67 dl/g or less,
(2) a hot-water heat shrinkage ratio measured by immersing the film for 10 seconds in 90°C hot water is 55% or more and 85% or less in a main shrinkage direction of the film,
(3) a hot-water heat shrinkage ratio measured by immersing the film for 10 seconds in 80°C hot water is -10% or more and 1% or less in an orthogonal direction to the main shrinkage direction of the film,
(4) a maximum shrinkage stress measured under 90°C hot air is 2 MPa or more and 7 MPa or less in the main shrinkage direction of the film,
(5) a difference of a hot-water heat shrinkage ratio measured by immersing the film for 10 seconds in 70°C hot water in the main shrinkage direction of the film is 0% or more and 5% or less between the film after being subjected to an aging treatment for 672 hours at 30°C and a relative humidity of 65% and the film before being subjected to the aging treatment;

wherein the hot-water heat shrinkage ratios and the maximum shrinkage stress are measured as disclosed in the description.

4. The heat-shrinkable polyester-based film according to claim 3, wherein an irregularity of thickness per 1m length is 10% or less both in the longitudinal direction of the film and in the width direction of the film; wherein the irregularity of the thickness is determined as disclosed in the description .

5. A heat-shrinkable label, comprising the heat-shrinkable polyester-based film according to claim 3 or 4.

6. A packaging bag, wherein the packaging bag is produced by covering at least a part of a periphery of an object for packaging with the heat-shrinkable label according to claim 5, and followed by subjecting to a heat-shrinking treatment.

**Patentansprüche**

1. Eine wärmeschrumpfbare Folie auf Polyesterbasis, umfassend einen amorphen copolymerisierten Polyester-Rohstoff für die Folie, wobei

der Polyester-Rohstoff die folgenden Anforderungen (1) bis (5) erfüllt:

(1) der copolymerisierte Polyester-Rohstoff enthält Ethylenterephthalat als einen konstituierenden Hauptbestandteil und umfasst Neopentylglykol mit 15 Mol-% oder mehr und 30 Mol-% oder weniger, wenn eine Gesamtmenge an Glykolkomponente in einer gesamten Polyesterharzkomponente als 100 Mol-% genommen wird,
(2) der copolymerisierte Polyester-Rohstoff umfasst eine von Diethylenglykol abgeleitete konstituierende Einheit mit 7 Mol-% oder mehr und 15 Mol-% oder weniger in der Gesamtmenge an Glykolkomponente von 100 Mol-% in der gesamten Polyesterharzkomponente,

(3) der copolymerisierte Polyester-Rohstoff weist eine Grenzviskosität von 0,60 dl/g oder mehr und weniger als 0,70 dl/g auf, gemessen bei 30°C an 0,2 g gelöstem Polyester in 50 ml eines 60/40 Gewichtsverhältnisses von Phenol/1,1,2,2-Tetrachlorethan,

(4) der copolymerisierte Polyester-Rohstoff weist eine Glasübergangstemperatur von 60°C oder höher und 70°C oder niedriger auf, bestimmt durch Differential-Scanning-Kalorimetrie von -40°C bis 120°C bei einer Erwärmungsrate von 10°C/min, und

(5) der Gehalt an Terephthalsäurekomponente beträgt 90 Mol-% oder mehr, wenn die Gesamtmenge an Polycarbonsäurekomponente in dem Polyester als 100 Mol-% genommen wird;

wobei, wenn der copolymerisierte Polyester-Rohstoff zu einer Folie mit einer Dicke von 30 $\mu$m verarbeitet wird, eine Anzahl an Defekten mit einer Größe von 1 mm oder mehr in der Längsrichtung der Folie oder in der Breitenrichtung der Folie im Durchschnitt 1,5 oder weniger pro 10 Quadratmeter der Folie beträgt, wobei die Anzahl an Defekten wie in der Beschreibung offenbart bestimmt wird;

mit der Maßgabe, dass der amorphe copolymerisierte Polyester-Rohstoff kein Polyester aus Terephthalsäure und einer Glykolkomponente, die aus 65 Mol-% Ethylenglykol, 10 Mol-% Diethylenglykol und 25 Mol-% Neopentylglykol besteht, ist, wobei der Polyester eine Glasübergangstemperatur von 70°C, eine Grenzviskosität von 0,65 dl/g und eine gemäß JIS K7199 bei einer Scherrate von 6080/s bei 250°C gemessene Schmelzviskosität von 130 Pa·s aufweist;

und mit der Maßgabe, dass der amorphe copolymerisierte Polyester-Rohstoff kein Polyester aus Terephthalsäure und einer Glykolkomponente, die aus 65 Mol-% Ethylenglykol, 10 Mol-% Diethylenglykol und 25 Mol-% Neopentylglykol besteht, ist, wobei der Polyester eine Glasübergangstemperatur von 70°C, eine Grenzviskosität von 0,65 dl/g, eine Carboxylendgruppenkonzentration AV von 17 Äq/t und einen Farbwert b von 5,9 aufweist; wobei der Farbwert b unter Verwendung eines kolorimetrischen Farbdifferenzmessgeräts aus den Tristimuluswerten XYZ gemessen wird, die die grundlegenden Stimulationswerte der Farbe ausdrücken, und wobei der AV-Wert durch das folgende Verfahren bestimmt wird:

eine 0,2 g Probe, die 24 Stunden lang bei 60°C getrocknet wurde, wird genau gewogen und ihr Gewicht zu diesem Zeitpunkt wird auf W in g festgelegt; in ein Reagenzglas werden 10 ml Benzylalkohol und die gewogene Probe gegeben, das Reagenzglas wird dann in ein bei 205°C erwärmtes Ölbad getaucht und die Probe wird darin unter Rühren mit einem Glasstab gelöst; die Probe, bei der eine Lösungszeit auf 3 Minuten, 5 Minuten oder 7 Minuten festgelegt wurde, wird jeweils als A, B oder C bezeichnet; danach wird ein neues Reagenzglas vorbereitet, nur Benzylalkohol wird hineingegeben und nach dem gleichen Verfahren behandelt; die Probe, bei der die Lösungszeit auf 3 Minuten, 5 Minuten oder 7 Minuten festgelegt wurde, wird jeweils als a, b oder c bezeichnet; Titration wird unter Verwendung einer 0,04 mol/l ethanolischen Kaliumhydroxidlösung durchgeführt, deren Faktor bereits bekannt war; als Indikator wird Phenolrot verwendet; ein Punkt, an dem sich eine Farbe von gelbgrün zu rosa verändert, wird als Endpunkt angenommen, und eine titrierte Menge der Kaliumhydroxidlösung in ml wird bestimmt; titrierte Mengen für die Proben A, B und C werden als XA, XB bzw. XC in ml bezeichnet; titrierte Mengen für die Proben a, b und c werden als Xa, Xb bzw. Xc in ml bezeichnet; die titrierte Menge V in ml, bei der die Lösungszeit 0 Minuten betrug, wurde durch eine Methode der kleinsten Quadrate unter Verwendung der titrierten Menge XA, XB oder XC für jede Lösungszeit bestimmt; in ähnlicher Weise wurde die titrierte Menge VO in ml unter Verwendung von Xa, Xb oder Xc bestimmt; danach wird AV gemäß der folgenden Formel bestimmt

$$AV \ (\text{Äq/t}) = [(V-VO) \times NF \times 1000] \ / \ W$$

mit

NF: Faktor von 0,04 mol/l Kaliumhydroxidlösung
W: Gewicht der Probe in g.

2. Die wärmeschrumpfbare Folie auf Polyesterbasis nach Anspruch **1,** wobei der copolymerisierte Polyester-Rohstoff eine Schmelzviskosität von 180 Pa·s oder weniger, gemessen bei einer Scherrate von 6080/s bei 250°C, und eine Schmelzviskosität von 350 Pa·s oder weniger, gemessen bei einer Scherrate von 6080/s bei 230°C, aufweist.

3. Die wärmeschrumpfbare Folie auf Polyesterbasis nach Anspruch 1 oder 2, welche die folgenden Anforderungen (1) bis (5) erfüllt:

(1) die Grenzviskosität beträgt 0,57 dl/g oder mehr und 0,67 dl/g oder weniger,

(2) ein Heißwasser-Wärmeschrumpfungsverhältnis, gemessen durch Eintauchen der Folie für 10 Sekunden in 90°C heißes Wasser, beträgt 55% oder mehr und 85% oder weniger in einer Hauptschrumpfungsrichtung der Folie,

(3) das Heißwasser-Wärmeschrumpfungsverhältnis, gemessen durch Eintauchen der Folie für 10 Sekunden in 80°C heißes Wasser, beträgt -10% oder mehr und 1% oder weniger in einer Richtung orthogonal zur Hauptschrumpfungsrichtung der Folie,

(4) eine maximale Schrumpfspannung, gemessen unter 90°C Heißluft, beträgt 2 MPa oder mehr und 7 MPa oder weniger in der Hauptschrumpfungsrichtung der Folie,

(5) eine Differenz eines Heißwasser-Wärmeschrumpfungsverhältnisses in der Hauptschrumpfungsrichtung der Folie, gemessen durch Eintauchen der Folie für 10 Sekunden in 70°C heißes Wasser, beträgt 0% oder mehr und 5% oder weniger zwischen der Folie, nachdem sie einer Alterungsbehandlung für 672 Stunden bei 30°C und einer relativen Feuchte von 65% unterzogen wurde und der Folie, bevor sie der Alterungsbehandlung unterzogen wurde;

wobei die Heißwasser-Wärmeschrumpfungsverhältnisse und die maximale Schrumpfspannung wie in der Beschreibung offenbart gemessen werden.

4. Die wärmeschrumpfbare Folie auf Polyesterbasis nach Anspruch 3, wobei eine Ungleichmäßigkeit der Dicke pro 1 m Länge sowohl in der Längsrichtung der Folie als auch in der Breitenrichtung der Folie 10% oder weniger beträgt; wobei die Ungleichmäßigkeit der Dicke wie in der Beschreibung offenbart bestimmt wird.

5. Ein wärmeschrumpfbares Etikett, umfassend die wärmeschrumpfbare Folie auf Polyesterbasis nach Anspruch 3 oder 4.

6. Ein Verpackungsbeutel, wobei der Verpackungsbeutel hergestellt wird, indem mindestens ein Teil eines Umfangs eines zu verpackenden Gegenstands mit dem wärmeschrumpfbaren Etikett nach Anspruch 5 bedeckt wird und anschließend einer Wärmeschrumpfungsbehandlung unterzogen wird.

**Revendications**

1. Film à base de polyester thermorétractable comprenant une matière première polyester copolymérisé amorphe pour le film, dans lequel

la matière première polyester satisfait aux exigences (1) à (5) suivantes :

(1) la matière première polyester copolymérisé contient du téréphtalate d'éthylène en tant que composant constitutif principal, et comprend du néopentylglycol à raison de 15 % en moles ou plus et 30 % en moles ou moins quand la quantité totale de composant glycol dans le composant résine de polyester total est considérée être de 100 % en moles,

(2) la matière première polyester copolymérisé comprend un motif constitutif dérivé de diéthylèneglycol à raison de 7 % en moles ou plus et 15 % en moles ou moins dans la quantité totale de composant glycol de 100 % en moles dans le composant résine de polyester total,

(3) la matière première polyester copolymérisé a une viscosité intrinsèque de 0,60 dl/g ou plus et inférieure à 0,70 dl/g, telle que mesurée à 30°C sur 0,2 g de polyester dissous dans 50 ml de phénol/1,1,2,2-tétrachloroéthane en un rapport en poids de 60/40,

(4) la matière première polyester copolymérisé a une température de transition vitreuse de 60 °C ou plus et 70 °C ou moins, telle que déterminée par calorimétrie à balayage différentiel de -40 °C à 120°C à une vitesse de montée en température de 10 °C/min, et

(5) la teneur en composant acide téréphtalique est de 90 % en moles ou plus quand le total du composant acide polycarboxylique dans le polyester est considéré être de 100 % en moles ;

dans lequel, quand la matière première polyester copolymérisé est mise sous la forme d'un film ayant une épaisseur de 30 $\mu$m, le nombre de défauts ayant une taille de 1 mm ou plus dans le sens de la longueur du film ou dans le sens de la largeur du film est de 1,5 ou moins en moyenne par 10 mètres carrés du film, dans lequel le nombre de défauts est déterminé comme exposé dans la description ;

sous réserve que la matière première polyester copolymérisé amorphe ne soit pas un polyester d'acide téréphtalique et d'un composant glycol consistant en 65 % en moles d'éthylèneglycol, 10 % en moles de diéthylèneglycol et 25 % en moles de néopentylglycol, le polyester ayant une température de transition vitreuse de 70 °C, une viscosité intrinsèque de 0,65 dl/g et une viscosité à l'état fondu, mesurée conformément à la norme JIS K7199 à une vitesse de cisaillement de 6080/s à 250 °C, de 130 Pa·s ;

et sous réserve que la matière première polyester copolymérisé amorphe ne soit pas un polyester d'acide téréphtalique et d'un composant glycol consistant en 65 % en moles d'éthylèneglycol, 10 % en moles de diéthylèneglycol et 25 % en moles de néopentylglycol, le polyester ayant une température de transition vitreuse de 70 °C, une viscosité intrinsèque de 0,65 dl/g, une concentration de groupes terminaux carboxyle AV de 17 éq/t, et une valeur de la coordonnée colorimétrique b de 5,9 ; dans lequel la valeur de la coordonnée colorimétrique b est mesurée au moyen d'un colorimètre de différence de couleur à partir des composantes trichromatiques XYZ exprimant les valeurs trichromatiques fondamentales de la couleur, et dans lequel la valeur AV est déterminée par la méthode suivante :

un échantillon de 0,2 g séché à 60 °C pendant 24 heures est pesé avec précision, et son poids à ce moment est établi être de W en g ; dans un tube à essai, sont ajoutés 10 ml d'alcool benzylique et l'échantillon pesé, puis le tube est trempé dans un bain d'huile chauffé à 205 °C et l'échantillon y est dissous avec agitation au moyen d'un bâtonnet en verre ; l'échantillon pour lequel le temps de dissolution a été établi être de 3 minutes, 5 minutes ou 7 minutes est désigné respectivement par A, B ou C ; après cela, un nouveau tube à essai est préparé, seul de l'alcool benzylique y est placé et traité par le même procédé ; l'échantillon pour lequel le temps de dissolution a été établi être de 3 minutes, 5 minutes ou 7 minutes est désigné respectivement par a, b ou c ; un titrage est effectué au moyen d'une solution éthanolique à 0,04 mol/l d'hydroxyde de potassium, dont un facteur est déjà connu ; du rouge de phénol est utilisé en tant qu'indicateur ; le point auquel la couleur passe du vert jaunâtre au rose est adopté en tant que point limite, et la quantité titrée en ml de la solution d'hydroxyde de potassium est déterminée ; les quantités titrées pour les échantillons A, B et C sont désignées respectivement par XA, XB et XC, en ml ; les quantités titrées pour les échantillons a, b et c sont désignées respectivement par Xa, Xb et Xc, en ml ; la quantité titrée V en ml pour laquelle le temps de dissolution était de 0 minute a été déterminée par la méthode des moindres carrés utilisant la quantité titrée XA, XB ou XC pour chaque temps de dissolution ; de façon similaire, la quantité titrée VO en ml a été déterminée par utilisation de Xa, Xb ou Xc ; après cela, la valeur AV est déterminée conformément à la formule suivante

$$AV (éq/t) = [(V-VO) \times NF \times 1000] / W$$

dans laquelle

NF : facteur de la solution à 0,04 mol/l d'hydroxyde de potassium
W : poids de l'échantillon en g.

2. Film à base de polyester thermorétractable selon la revendication 1, dans lequel la matière première polyester copolymérisé a une viscosité à l'état fondu de 180 Pa·s ou moins, mesurée à une vitesse de cisaillement de 6080/s à 250 °C, et une viscosité à l'état fondu de 350 Pa·s ou moins, mesurée à une vitesse de cisaillement de 6080/s à 230 °C.

3. Film à base de polyester thermorétractable selon la revendication 1 ou 2, satisfaisant aux exigences (1) à (5) suivantes :

(1) la viscosité intrinsèque est de 0,57 dl/g ou plus et 0,67 dl/g ou moins,
(2) le taux de retrait thermique dans l'eau chaude, mesuré par immersion du film pendant 10 secondes dans de l'eau chaude à 90 °C, est de 55 % ou plus et 85 % ou moins dans le sens de retrait principal du film,
(3) le taux de retrait thermique dans l'eau chaude, mesuré par immersion du film pendant 10 secondes dans de l'eau chaude à 80 °C, est de -10 % ou plus et 1 % ou moins dans la direction orthogonale au sens de retrait principal du film,
(4) la contrainte maximale due au retrait, mesurée dans de l'air chaud à 90°C, est de 2 MPa ou plus et 7 MPa ou moins, dans le sens de retrait principal du film,
(5) la différence de taux de retrait thermique dans l'eau chaude, mesuré par immersion du film pendant 10 secondes dans de l'eau chaude à 70 °C dans le sens de retrait du film, est de 0 % ou plus et 5 % ou moins entre le film après qu'il a subi un traitement de vieillissement pendant 672 heures à 30 °C et sous une humidité relative de 65 % et le film avant qu'il ait subi le traitement de vieillissement ;

dans lequel les taux de retrait thermique dans l'eau chaude et la contrainte maximale due au retrait sont mesurés comme exposé dans la description.

4. Film à base de polyester thermorétractable selon la revendication 3, dans lequel l'irrégularité d'épaisseur par mètre de longueur est de 10 % ou moins tant dans le sens de la longueur du film que dans le sens de la largeur du film ; dans lequel l'irrégularité de l'épaisseur est déterminée comme exposé dans la description.

5. Etiquette thermorétractable comprenant le film à base de polyester thermorétractable de la revendication 3 ou 4.

6. Sac d'emballage, lequel sac d'emballage est produit par recouvrement d'au moins une partie de la périphérie d'un objet pour emballage avec l'étiquette thermorétractable de la revendication 5, suivi d'une soumission à un traitement de retrait thermique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0533895 B
- JP 4411556 B
- JP 5249997 B
- JP 2011079229 A
- JP H0753737 A
- WO 2018110493 A1
- EP 3617247 A1
- EP 3581604 A1